# EUROPÄISCHE PATENTSCHRIFT

(11) **EP 1 210 568 B1**
(45) Veröffentlichungstag und Bekanntmachung des Hinweises auf die Patenterteilung: **14.01.2004**
(21) Anmeldenummer: 99944614.9
(22) Anmeldetag: 07.09.1999
(51) Int. Cl.: G01G 3/14, G01L 1/22

(54) **VERFORMUNGSKÖRPER**
DEFORMABLE BODY
CORPS DEFORMABLE

(43) Veröffentlichungstag der Anmeldung: 05.06.2002
(73) Patentinhaber: GWT Global Weighing Technologies GmbH, 22145 Hamburg (DE)
(72) Erfinder: KRAUS, Matthias, D-22147 Hamburg (DE)
(74) Vertreter: COHAUSZ & FLORACK
(86) Internationale Anmeldenummer: PCT/EP1999/006558
(87) Internationale Veröffentlichungsnummer: WO 2001/018504

(56) Entgegenhaltungen:
- EP-A- 0 800 069
- DE-A- 3 405 127
- US-A- 4 733 571
- MEASUREMENT TECHNIQUES., Bd. 32, Nr. 1, Januar 1989 (1989-01), Seiten 57-60, XP000066043 CONSULTANTS BUREAU. NEW YORK., US ISSN: 0543-1972

## Beschreibung

Die Erfindung betrifft einen Verformungskörper zum Einsatz in einer Wägezelle mit einem Kopf, einem Rumpf und einem Fuß, wobei die obere Endfläche des Kopfes im wesentlichen als Kugelfläche ausgebildet ist, der Kopf vom Rumpf durch mindestens einen oberen Einstich abgesetzt ist, der Rumpf im wesentlichen zylinderförmig ausgebildet ist, im Rumpf auf einer Achse senkrecht zur Längsachse des Verformungskörpers zwei eine Tiefe geringer als der Radius des Rumpfes aufweisende Querlöcher vorgesehen sind, der Fuß vom Rumpf durch mindestens einen unteren Einstich abgesetzt ist und die untere Endfläche des Fußes im wesentlichen als Kugelfläche ausgebildet ist.

Verformungskörper mit einer derartigen Geometrie sind für verschiedene Laststufen etwa seit Mitte der achtziger Jahre bekannt und werden vorwiegend in Drucklastwägezellen aber auch in Zuglastwägezellen eingesetzt. Entscheidend ist bei den Verformungskörpern die Wahl der Abmessungen bei grundsätzlich gegebener Geometrie, so daß eine Lastmessung gewährleistet ist, die im Hinblick auf ihre Linearität und Hysterese ohne zusätzliche Maßnahmen, wie beispielsweise die Anbringung von Halbleiterdehnungsmeßstreifen, Genauigkeitsklassen von 0,010 % und besser erfüllt. Die Verwendung von Halbleiterdehnungsmeßstreifen ist insbesondere dahingehend problematisch, daß diese erhebliche Qualitätsprobleme aufweisen.

Verformungskörper zum Einsatz in Wägezellen bestehen aus einem hochfesten metallischen Werkstoff, in der Regel aus Stahl. Auf der Oberfläche dieses Verformungskörpers werden an einer geeigneten Stelle Dehnungsmeßstreifen, in der Regel Konstantan- oder Platindehnungsmeßstreifen, angeordnet. Diese Dehnungsmeßstreifen sind üblicherweise elektrisch als Wheatstone-Vollbrücke beschaltet. Die Empfindlichkeit der Wägezelle, in der ein oben beschriebener Verformungskörper eingesetzt wird, wird in mV/V angegeben. Hiermit wird die an der Vollbrücke anliegende Signalspannung pro Volt Speisespannung bei Nennlast verstanden. Diese Angabe ist abhängig von dem Typ des verwendeten Dehnungsmeßstreifens bzw. dem k-Faktor des Dehnungsmeßstreifens. In der weiteren Beschreibung wird stets von der Verwendung von Konstantan-Dehnungsmeßstreifen ausgegangen, die einen k-Faktor von etwa 2 aufweisen.

Geometrisch einfache und damit leicht herstellbare Verformungskörper, z.B. Zylinder, haben mehr oder weniger große Linearitätsfehler, wenn sie in ihrer Längsachse durch Druck oder Zug belastet werden. Sie sind deshalb nicht geeignet, in eichpflichtigen Wägeanlagen eingesetzt zu werden, wenn ihre Meßfehler nicht über Zusatzmaßnahmen reduziert werden. Beispielsweise ist zur Linearisierung neben anderen Methoden bekannt, eine Kompensation mittels Halbleiter-Dehnungsmeßstreifen vorzunehmen.

Es hat sich in der Vergangenheit gezeigt, daß die Geometrie der bekannten Verformungskörper, von denen die Erfindung ausgeht, bei geeigneter Abstimmung der Maße die Eichfähigkeit sowohl im Hinblick auf Linearität als auch auf Hysterese herstellen kann. Hierzu sind in der Vergangenheit verschiedene Verformungskörper grundsätzlich gleicher Geometrie mit auf die jeweils in Rede stehende Laststufe angepaßten Maßen entwickelt worden. Dabei hat sich gezeigt, daß die Maße für jeden neu entwickelten Verformungskörper einer abweichenden Laststufe von Grund auf neu bestimmt werden mußten, also nicht beispielsweise über eine Verhältnisbildung aus den Maßen anderer Verformungskörper abgeleitet werden können. Das Verfahren zur Bestimmung dieser exakten Maße ist selbst mit der heute möglichen Rechnerunterstützung (Finite-Elemente-Methode) nicht alleine zu realisieren und damit sehr zeitaufwendig und nicht durch einfache Regeln beschreibbar.

Ausgehend von der zuvor aufgezeigten Problematik liegt der vorliegenden Erfindung die Aufgabe zugrunde, einen Verformungskörper zum Einsatz in einer Wägezelle zur Verfügung zu stellen, welcher bei einer Nennlast von etwa 50 t höchste Anforderungen an die Linearität und Hysterese der Verformung erfüllt.

Erfindungsgemäß ist die zuvor hergeleitete und aufgezeigte Aufgabe dadurch gelöst, daß der Durchmesser des oberen Einstichs 38 mm ± 10 mm beträgt, der Durchmesser des Rumpfes 72 mm ± 10 mm beträgt, der Abstand der Querlochachse vom oberen Einstich ± 10 mm dem Abstand der Querlochachse vom unteren Einstich entspricht, der Durchmesser der Querlöcher 24 mm -5 mm/+10 mm beträgt, der Abstand der Endflächen der Querlöcher voneinander 28 mm ± 10 mm beträgt, der Abstand des oberen Einstichs vom unteren Einstich 61 mm ± 20 mm beträgt und der Durchmesser des unteren Einstichs 40 mm ± 10 mm beträgt.

Ein Verformungskörper mit den angegebenen Vorzugsmaßen liefert für eine Nennlast von 50 t ein Ausgangssignal von 2 mV/V mit einer eichfähigen Kennlinie, d.h. mit sehr guter Linearität und geringer Hysterese. Verformungskörper, deren geometrische Maße von den Vorzugsmaßen in den angegebenen Grenzen abweichen, erfüllen ebenfalls hohe Anforderungen an die Linearität bzw. die Hysterese. Auch lassen sich geringfügige Abweichungen bei einem geometrischen Maß durch gegenläufig wirkende, geringfügige Abweichungen bei einem anderen geometrischen Maß kompensieren, ohne daß dies auf Linearität und Hysterese nennenswerte Auswirkungen hat. Es ist durchaus denkbar, unter Preis-Leistungs-Gesichtspunkten hohe Toleranzen, innerhalb der angegebenen Grenzen, für die geometrischen Maße zuzulassen.

Dadurch, daß der Radius der oberen Endfläche 35 mm -10 mm/+500 mm beträgt, ist gewährleistet, daß leichte Winkelfehler in den Lasteinleitungspunkten ausgeglichen werden können und die eigentliche Verformungsgeometrie nicht unnötig durch ein Biegemoment belasten.

Gleiches gilt für die Ausgestaltung des erfindungsgemäßen Verformungskörpers dadurch, daß der Radius der unteren Endfläche 220 mm -100 mm/+500 mm beträgt. Es ist von Vorteil, den Radius der unteren Endfläche größer zu wählen, um zu gewährleisten, daß das Stabilitätsverhalten und Querkraft- sowie Momenteneinflüsse gut aufeinander abgestimmt sind.

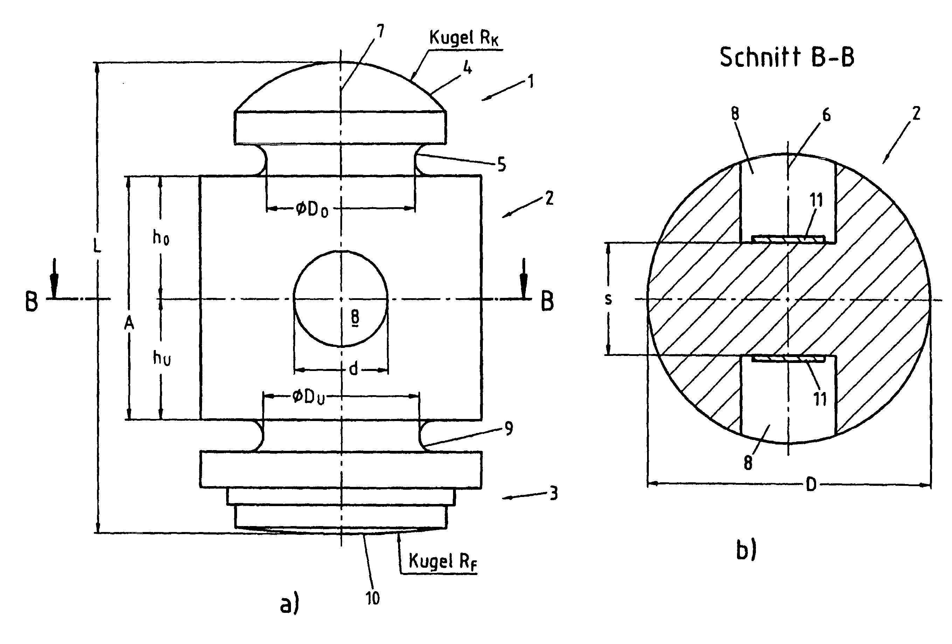

Es gibt nun eine Vielzahl von Möglichkeiten, den erfindungsgemäßen Verformungskörper auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung. In der Zeichnung zeigt die einzige Figur ein Ausführungsbeispiel in einer seitlichen Ansicht a) und in einem Schnitt entlang der in a) dargestellten Linie B-B b) .

Das in der einzigen Figur dargestellte Ausführungsbeispiel eines erfindungsgemäßen Verformungskörpers zum Einsatz in einer Wägezelle weist einen Kopf 1, einen Rumpf 2 und einen Fuß 3 auf. Die obere Endfläche 4 des Kopfes 3 ist im wesentlichen als Kugelfäche ausgebildet. Der Kopf 1 ist vom Rumpf 2 durch einen oberen Einstich 5 abgesetzt. In den im wesentlichen zylinderförmig ausgebildeten Rumpf 2 sind auf einer Achse 6 senkrecht zur Längsachse 7 des Verformungskörpers zwei eine Tiefe geringer als der Radius des Rumpfes 2 aufweisende Querlöcher 8 vorgesehen. Der Fuß 3 ist vom Rumpf 2 ebenso wie der Kopf 1 durch einen unteren Einstich 9 abgesetzt. Schließlich ist die untere Endfläche 10 des Fußes 3 im wesentlichen als Kugelfläche ausgebildet.

Den erfindungsgemäßen Vorzugsmaßen entsprechend beträgt der Durchmesser des oberen Einstichs (5) (Dₒ) 38 mm, der Durchmesser des Rumpfes (2) (D) 72 mm, der Durchmesser der Querlöcher (8) (d) 24 mm, der Abstand der Endflächen (s) voneinander 28 mm, der Abstand des oberen Einstichs (5) vom unteren Einstich (9) (A) 61 mm und der Durchmesser des unteren Einstichs (9) (D_{U}) 40 mm. Der Abstand der Querlochachse 6 vom oberen Einstich 5 (hₒ) entspricht vorzugsweise exakt dem Abstand des unteren Einstichs 9 (h_{U}) von der Querlochachse 6.

Der Radius R_{K} der oberen Endfläche 4 beträgt 35 mm, während der Radius R_{F} der unteren Endfläche 10 des Fußes 3 220 mm beträgt. Die Länge L des Verformungskörpers beträgt bei dem dargestellten Ausführungsbeispiel 118,5 mm.

Weitere geeignete Geometrien ergeben sich durch die Anwendung der Ähnlichkeitsgesetze innerhalb der angegebenen Brandbreiten für die einzelnen geometrischen Maße. Es muß immer eine deutlich ausgeprägte Geometrie der beschriebenen Form vorliegen, d.h. der Linearisierungseffekt verschwindet beispielsweise, wenn die Plattendicke s für die Platte zwischen den beiden Querlöchern 8 so stark anwächst, daß keine Querlöcher mehr vorhanden sind. Je tiefer die Querlöcher 8 sind, desto stärker nimmt der Linearisierungseffekt zu bis hin zu einem jeweiligen Maximalwert. Ab einer gewissen Tiefe liegt der Linearitätsfehler in der Nähe von Null, d.h. es ist kein Fehler mehr vorhanden. In Einzelfällen ist sogar eine leichte Überkompensation, d.h. ein kleiner, aber dann nicht mehr störender negativer Linearitätsfehler möglich.

Zur Meßwertaufnahme vorgesehene Dehnungsmeßstreifen 11 sind bei den beschriebenen Verformungskörpern auf beiden Böden der Querlöcher 8 angeordnet, wodurch die Anforderungen an die Linearität und Hysterese erfüllt werden können.

Die Einstiche 5, 9 sind in irgendeiner Form notwendig. Ihr Durchmesser liegt etwa bei dem halben Außendurchmesser des Rumpfes 2. Ihr minimaler Durchmesser ist aber durch die erforderliche Festigkeit für die vorgesehene Maximalbelastung begrenzt. Beide Einstiche 5, 9 dienen zur gezielten Lasteinleitung in den Rumpf 2. Oberhalb des oberen Einstiches 5 und unterhalb des unteren Einstiches 9 sollte noch etwas Material stehen bleiben, damit sich die Spannungsspitzen der Lasteinleitung, die sich in der Nähe der Grenzflächen durch die Belastung ergeben, möglichst noch innerhalb der Überstände über die Einstiche 5, 9 auf ein unkritisches Maß abbauen können. Die hauptsächlich für die Meßeigenschaften und damit auch für die Empfindlichkeit maßgebende Geometrie wird durch die Einstiche 5, 9 begrenzt und bildet die sog. Verformungsgeometrie. Die an die Einstiche 5, 9 angrenzende sog. äußere Geometrie ist zwar nicht bedeutungslos, spielt aber eine untergeordnete Rolle, so daß eine Abweichung von 1 mm innerhalb der Verformungsgeometrie eine stärkere Auswirkung auf die Qualität des Meßsignals hat als eine Abweichung von 1 mm in der äußeren Geometrie. Beispielsweise zählt die Gesamtlänge L mit zur äußeren Geometrie, hat damit einen geringeren Einfluß und läßt sich aus diesem Grund den äußeren Gegebenheiten anpassen.

Das in Verbindung mit der Zeichnung beschriebene Ausführungsbeispiel weist bei Verwendung einer Dehnungsmeßstreifen-Vollbrücke, deren Dehnungsmeßstreifen einen k-Faktor von etwa 2 besitzt, eine Empfindlichkeit von 1 mV/V bei einer Nennlast von 25 000 kg und 2 mV/V bei einer Nennlast von 50 000 kg auf. Dies trifft für den Fall zu, in dem das Elastizitätsmodul des Werkstoffes, bei dem dargestellten Ausführungsbeispiel Stahl, 200 000 N/mm² ± 15 000 N/mm² beträgt.

Die Kalibrierung der Empfindlichkeit ist auch auf jeden anderen Zwischenwert möglich, so auch - falls gewünscht - durch geringe Geometrieanpassung auf die für Kraftaufnehmer maßgebende SI-Einheit Newton. Bei Verwendung eines Materials mit einem anderen Elastizitätsmodul ergibt sich direkt proportional auch eine andere Empfindlichkeit.

## Patentansprüche

1. Verformungskörper zum Einsatz in einer Wägezelle mit einem Kopf (1), einem Rumpf (2) und einem Fuß (3), wobei die obere Endfläche (4) des Kopfes (1) im wesentlichen als Kugelfläche ausgebildet ist, der Kopf (1) vom Rumpf (2) durch mindestens einen oberen Einstich (5) abgesetzt ist, der Rumpf (2) im wesentlichen zylinderförmig ausgebildet ist, im Rumpf (2) auf einer Achse (6) senkrecht zur Längsachse (7) des Verformungskörpers zwei eine Tiefe geringer als der Radius des Rumpfes (2) aufweisende Querlöcher (8) vorgesehen sind, der Fuß (3) vom Rumpf (2) durch mindestens einen unteren Einstich (9) abgesetzt ist und die untere Endfläche (10) des Fußes (3) im wesentlichen als Kugelfläche ausgebildet ist,
**dadurch gekennzeichnet, daß** der Durchmesser (Dₒ) des oberen Einstichs (5) 38 mm ± 10 mm beträgt, der Durchmesser (D) des Rumpfes (2) 72 mm ± 10 mm beträgt, der Abstand (hₒ) der Querlochachse (6) vom oberen Einstich (5) ± 10 mm dem Abstand (hᵤ) der Querlochachse vom unteren Einstich (9) entspricht, der Durchmesser (d) der Querlöcher (8) 24 mm -5 mm/+10 mm beträgt, der Abstand (s) der Endflächen der Querlöcher (8) voneinander 28 mm ± 10 mm beträgt, der Abstand (A) des oberen Einstichs (5) vom unteren Einstich (9) 61 mm ± 20 mm beträgt und der Durchmesser (Dᵤ) des unteren Einstichs (9) 40 mm ± 10 mm beträgt.

2. Verformungskörper nach Anspruch 1,
**dadurch gekennzeichnet, daß** der Radius der oberen Endfläche (4) 35 mm -10 mm/+500 mm beträgt.

3. Verformungskörper nach Anspruch 1 oder 2,
**dadurch gekennzeichnet, daß** der Radius der unteren Endfläche (10) 220 mm -100 mm/+500 mm beträgt.

## Claims

1. A deformation element for use in a load cell, comprising a top section (1), a body section (2) and a bottom section (3), wherein the upper end face (4) of the top section (1) is essentially realized as a spherical surface, wherein the top section (1) is offset from the body section (2) by at least one upper recess (5), wherein the body section (2) is essentially realized cylindrically, wherein two transverse holes (8) with a depth smaller than the radius of the body section (2) are provided in the body section (2) on an axis (6) that extends perpendicular to the longitudinal axis (7) of the deformation element, wherein the bottom section (3) is offset from the body section (2) by at least one lower recess (9), and wherein the lower end face (10) of the bottom section (3) is essentially realized as a spherical surface, **characterized in that** the upper recess (5) has a diameter (Dₒ) of 38 mm ± 10 mm, the body section (2) has a diameter (D) of 72 mm ± 10 mm, the distance (hₒ) between the transverse hole axis (6) and the upper recess (5) corresponds to the distance (hᵤ) between the transverse hole axis and the lower recess (9) ± 10 mm, **in that** the transverse holes (8) have a diameter (d) of 24 mm -5 mm/+10 mm, the end faces of the transverse holes (8) are spaced apart from one another by a distance (s) of 28 mm ± 10 mm, the upper recess (5) is spaced apart from the lower recess (9) by a distance (A) of 61 mm ± 20 mm, and the lower recess (9) has a diameter (Dᵤ) of 40 mm ± 10 mm.

2. The deformation element according to Claim 1, **characterized in that** the upper end face (4) has a radius of 35 mm -10 mm/+500 mm.

3. The deformation element according to Claim 1 or 2, **characterized in that** the lower end face (10) has a radius of 220 mm -100 mm/+500 mm.

## Revendications

1. Corps déformable destiné à être utilisé dans une cellule de pesée, comportant une tête (1), un tronc (2) et un pied (3), dans lequel la surface d'extrémité supérieure (4) de la tête (1) est réalisée essentiellement sous la forme d'une surface sphérique, la tête (1) est étagée par rapport au tronc (2) par au moins une gorge supérieure (5), le tronc (2) est réalisée essentiellement comme une forme cylindrique, deux trous transversaux (8) possédant une profondeur inférieure au rayon du tronc (2) sont prévus dans le tronc (2) sur un axe (6) perpendiculaire à l'axe longitudinal (7) du corps déformable, le pied (3) est étagé par rapport au tronc (2) par au moins une gorge inférieure (9), et la surface d'extrémité inférieure (10) du pied (3) est réalisée essentiellement sous la forme d'une surface sphérique, **caractérisé en ce que** le diamètre (D₀) de la gorge supérieure (5) est égal à 38 mm ± 10 mm, le diamètre (D) du tronc (2) est égal à 72 mm ± 10 mm, la distance (h₀) entre l'axe (6) du trou transversal et la gorge supérieure (5) correspond à la distance (hᵤ.) entre l'axe du trou transversal et la gorge inférieure (9) ± 10 mm, le diamètre (d) des trous transversaux (8) est égal à 24 mm - 5 mm / + 10 mm, la distance mutuelle (s) des surfaces d'extrémité des trous transversaux (8) est égale à 28 mm ± 10 mm, la distance (A) entre la gorge supérieure (5) et la gorge inférieure (9) est égale à 61 mm ± 20 mm et le diamètre (Dᵤ) de la gorge inférieure (9) est égal à 40 mm ± 10 mm.

2. Corps déformable selon la revendication 1, **caractérisé en ce que** le rayon de la surface d'extrémité supérieure (4) est égal à 35 mm - 10 mm / + 500 mm.

3. Corps déformable selon la revendication 1 ou 2, **caractérisé en ce que** le rayon de la surface d'extrémité inférieure (10) est égal à 220 mm - 100 mm / + 500 mm.
